# EUROPEAN PATENT SPECIFICATION

(11) **EP 0 694 807 B1**
(45) Date of publication and mention of the grant of the patent: **15.03.2000**
(21) Application number: 95305281.8
(22) Date of filing: 28.07.1995
(51) Int. Cl.: G03B 27/62, G03D 15/04

(54) **Photosensitive material processing equipment**
Vorrichtung zur Behandlung von lichtempfindlichem Material
Dispositif pour le traitement de matériel photosensible

(30) Priority: 28.07.1994 JP 17626094
(43) Date of publication of application: 31.01.1996
(73) Proprietor: NORITSU KOKI CO., LTD., Wakayama-shi, Wakayama (JP)
(72) Inventor: Nakaoka, Nobuaki, c/o Noritsu Koki Co., Ltd., Wakayama-shi, Wakayama (JP); Oka, Shin-ichi, c/o Noritsu Koki Co., Ltd., Wakayama-shi, Wakayama (JP)
(74) Representative: Hillier, Peter

(56) References cited:
- EP-A- 0 433 234
- EP-A- 0 516 055
- DE-A- 3 743 927
- DE-A- 4 000 796
- US-A- 4 724 463
- US-A- 4 769 679

## Description

### Field of Invention

This invention relates to photosensitive material processing equipment.

### Background of Invention

For photosensitive material processing equipment involving the advance of photosensitive material (for example, developed film or printing paper) on which there is recorded serially a plurality of frames of pictures, there must be means for positioning the photosensitive material according to the recorded positions of the picture frames. Position control is based on: (i) the quantity advanced of the photosensitive material (as determined by the quantity advanced determining means) and (ii) the boundary information of framed pictures (as determined by boundary determination means).

In other words, the distance between the position of a frame boundary (determined by boundary determining means) and the position of a frame boundary in the appropriate position in the processing portion, is pre-measured. After a frame boundary is determined, the photosensitive material is advanced said pre-measured distance, stops, and its position is determined by a process portion. Therefore, to position properly, it is necessary in the processing portion that the boundary detecting means detect the boundary properly.

In the photosensitive material, there is usually a clear density difference between the recorded picture frame part and the surrounding blank part. This density difference can be determined by a boundary determining means to be the picture boundary.

But sometimes the density difference between the picture part and the blank part is not clear because of object information recorded on the photosensitive material or because the blank part between adjacent frames is extremely narrow. Either situation makes picture boundary determination difficult.

In such situations, automatic locating is impossible conventionally, so the human operator must personally watch the position of the photosensitive material in order to activate manually the input means to input a modify command to position the photosensitive material.

But it is not always easy to know the exactly the position of the photosensitive material in the process portion by its structure. Operating efficiency is low because every time an unsatisfactory boundary frame is determined by boundary determining means, a time-consuming position determining procedure is necessary.

This invention aims to improve the operational efficiency and reliability of photosensitive material processing equipment.

DE-A-4000796 discloses a photosensitive material processing equipment comprising: advancing means for advancing photosensitive material having recorded thereon a plurality of picture frames; advanced quantity determining means for determining the quantity of photosensitive material that has been advanced; boundary determining means for determining the picture boundary between adjacent picture frames on said photosensitive material advanced by said advancing means; processing means for exposing images of the picture frames of said photosensitive material onto photographic paper; position control means for determining and controlling the position of said photosensitive material with respect to said processing means based upon information determined by said advanced quantity determining means and said boundary determining means; modification input means for manually inputting a modify command for modifying the position of said photosensitive material determined and controlled by said position control means picture; reading means for reading pictures of said photosensitive material on the input side of said processing means.

The invention is defined in claim 1 and is characterised by a monitor for displaying information read by said picture reading means; wherein the position control means is arranged to determine whether the determination of the picture boundary by said boundary determining means is satisfactory or unsatisfactory, and when said determination is unsatisfactory the position control means performs a modifying process in which the monitor, based on information read by said picture reading means, displays an indication to modify by means of said modification input means the position of the photosensitive material, with respect to said processing means.

A second feature of the invention provides that when said position control means determines that said boundary determination is unsatisfactory, the position control means displays on said monitor: i) a modify position index and ii) a set position index based on information of the picture boundary read by said picture reading means and determined said boundary determining means.

A third feature provides that said position control means, when said boundary determining means has made an unsatisfactory determination during the execution of said modifying process, displays on said monitor the preceding and the following positioned picture frames based upon information read by said picture reading means with a modify position index according to the advanced quantity of photosensitive material.

A fourth feature of the invention provide a positioning stage for visual determination of the position of said photosensitive material, wherein when said position control means has received an unable-to-modify message input at its modifying process execution, said position control means controls said advancing means to advance an area of said photosensitive material of which said position is not determined and to automatically stop said advancing means at the positioning stage.

A fifth feature of the invention provides an advancing path opening gate at an input side of said processing means on the advancing path of said photosensitive material, which is switchable between two states, an advancing state where said photosensitive material can be advanced towards said processing means, and a discharging state where photosensitive material can be removed from the advancing path.

In a sixth feature said position control means, upon executing said modifying process, advances said photosensitive material to said gate upon the input of an unable-to-modify message and switches the gate from said advancing state to said discharging state.

In a seventh feature at an input side initial position of said processing means on the advancing path of photosensitive material, there is auxiliary boundary determining means to determine the picture boundary of adjacent frames of the photosensitive material. Said position control means compares between determined information of boundary determining means and determined information of auxiliary boundary determining means and then detects differences of advanced quantity of photosensitive material at each determining place.

The eighth feature (in conjunction with the first to seventh featured construction) is that there is contrast adjusting means to adjust the contrast of picture displayed on the monitor based on information read by said picture reading means.

The ninth feature (in conjunction with the first to eighth featured construction) is that said photosensitive material is photographic film and there is an exposure portion to expose picture of the film to printing paper at a position determined by position control means.

The tenth feature (in conjunction with the eighth featured construction) is that the modifying process is executed when the number of continuous frames for which a boundary cannot be satisfactorily determined by boundary determining means, exceeds a predetermined limit. If the number is less than or equal to a predetermined limit, then only one frame is advanced and then the position is determined.

The eleventh feature (in conjunction with the first to eighth featured constructions) is that said photosensitive material is photographic film, and the said process portion cuts the photosensitive material at positions between frames set by position control means.

The twelfth feature (in conjunction with the eleventh featured construction) is that during execution of said modifying process, if an input of unable-to-modify message occurs, then the "between frame" position nearest to the output-side of advancing path of photographic film is set by said position control means to be new cut position setting.

The thirteenth feature (in conjunction with the eleventh and twelfth featured construction) is said position control means determines if there has been a satisfactory determination by said boundary determining means of the boundary of each frame of a preset number of advancing frames from said cut position setting means. The modifying process is executed only if the boundary determination of one or more frames is unsatisfactory.

The fourteenth feature (in conjunction with the first to eighth featured constructions), said photosensitive material is film said processing portion includes exposure portion to expose picture of said film to print paper, and film cutting portion to cut said film upon every predetermined number of frames at cut position setting between adjacent frames to be cut.

The fifteenth feature (in conjunction with the fourteenth featured construction), said position control means executes said modifying process if the number of continuous frames for which a boundary cannot be satisfactorily determined by said boundary determining means, exceeding predetermined limit of continuous frames; advances said film a set quantity equivalent to one frame of film to determine position if the number of continuous frames for which a boundary cannot be satisfactorily determined by said boundary determining means, continues within predetermined limit of frames. Furthermore, said advancing means identifies satisfactory determination of boundary of one or more frames of cut position setting by boundary determining means. It is so constructed to execute said modifying process only if one or more frames boundary determination is unsatisfactory.

According to the first feature, position control means has monitor showing modify indication to position of photosensitive material, and executes modifying process if boundary determining of picture is unsatisfactory. In other words, the position of photosensitive material read by said picture reading means can be based on advanced quantity of photosensitive material determined by advanced quantity determining means. The photosensitive material area shown on monitor at any position can be held. But the monitor display is not capable of indicating for certain whether boundary determination has been completed or not.

Now, watching monitor, operator inputs from modify input means specifying frame position on which is unable to determine satisfactorily picture boundary, then it is able to ensure information for position control at processing portion by position control means.

According to the second feature of the invention, position control means, in case boundary determining means is unable to determine satisfactorily boundary of picture, monitor shows picture read by said picture reading means, and ensures based on determined information of picture boundary of determined frames satisfactorily by boundary determining means. It shows frames not satisfactorily determined picture boundary, and a modify position index indicating fixed relationship with position of picture and advanced quantity of photosensitive material applying fact that each frame on photosensitive material is arranged in almost equal pitch.

At the point these information showed on monitor, it mainly does not show fixed position relationship between the modify position index and frames not satisfactorily determined picture boundary precisely due to that modify position index is shown by estimation of position. Operator then, watching monitor, inputs modify command from modify input means to hold fixed position relationship exactly between modify position index and picture frames not satisfactorily determined picture boundary. During this input operation, operator can input modify command referring set position index on screen and position relationship of picture frames related to set position index. So, based on input information, information for locating control at processing portion of photosensitive material can be ensured.

According to the third feature of the invention, when boundary determining means cannot satisfactorily determine boundary picture, position control means operates to display on the monitor the modify position index indicating fixed position relationship with frames whose boundaries were not satisfactorily determined read by said picture reading means, with pictures of plural frames positioned serially finding from estimated advancing quantity of photosensitive material.

At the point monitor shows these information, modify position index is shown by estimating position, locating modify index mainly does not hold fixed position relationship exactly with frames with boundaries not satisfactorily determined. Watching the monitor, operator then inputs modify position index by modify input means, to hold positionally correctly the unsatisfactorily determined boundary picture. During input operation, operator can input modify command by finding subject position of boundary picture of frames whose boundaries were not satisfactorily determined, from picture arranged condition of plural frames on the monitor screen. So, information for locating control at process portion, based on input information, can be ensured by position control means.

According to the fourth feature of the invention, even while position control means executes the modifying process, in case monitor displayed picture is not clear and the operator is unable to input a modify command and so inputs an unable-to-modify message, position control means advances unable-to-position position in photosensitive material to positioning stage (DS). Operator then is able to execute positioning of photosensitive material visually at positioning stage (DS).

According to the fifth feature of the invention, advancing path opening gate equipped at input-side of processing portion on advancing path of photosensitive material switched to discharging state from advancing state, photosensitive material can be taken outside of advancing path before it reaches process portion.

According to the sixth feature of the invention, even that position control means executes modifying process, in case monitor display is not clear, as operator inputs unable-to-modify message because he cannot input satisfactory a modify command, the position control means advances photosensitive material, corresponding to part of modifying process during input of unable-to-modify message, to outside of advancing path from advancing path opening gate which has been switched to discharging state.

According to the seventh feature of the invention, distance between boundary determining means and processing portion is sometimes quite long depending on the structure of the processing portion and said picture reading means. Even in this case, position control means compares determined information of boundary determining means with determined information of auxiliary determining means equipped at immediate place to input-side of processing portion and determine advanced quantity differences of photosensitive material at each determining position. Therefore advanced quantity of photosensitive material at processing portion can be exactly held and also its positioning can be precisely executed.

According to the eighth feature of the invention, while operator watches the monitor and inputs a modify command for positioning of photosensitive material, boundary part of picture can be adjusted to be seen more clearly by adjusting contrast of picture on monitor read by said picture reading means through contrast adjusting means.

According to the ninth feature of the invention, at processing portion composed of exposure portion, frame picture of film is exposed on photographic paper.

Regarding exposure of picture of film on printing paper, subject part of picture of frame of film can be satisfactorily exposed to printing paper, by satisfactorily positioning of film at exposure portion due to said feature.

According to the tenth feature of the invention, position control by boundary determining means occurs continuously, if continued number of such frames is within predetermined limit, positioning is executed by advancing setting quantity equivalent to one frame of film without execution of modifying process. Modifying process will be executed if continued number of frames exceeding its predetermined limit.

In other words, the exposed part of film is somewhat narrower than entire area of film, so there is tolerance for position difference between terminal space of exposed part and partition part of picture boundary.

Consequently, even that positioning of said predetermined number of frames is executed by advancing setting quantity equivalent to one frame of film without reference to determined information of boundary determining means, modifying process of position control means and its accompanied input of modify command by operator can be reduced just by predetermined number of frames on tolerance area of said position difference.

According to the eleventh feature of the invention, at processing portion composed of film cutting portion, process of film as photosensitive material is that film be cut at cut position setting for cutting between frames upon every predetermined number of frames to be separated.

This film cutting is for filing and storage of film such as negative sheets. Cut predetermined number is ordinarily four or six frames.

By said feature construction, film can be cut satisfactorily by proper positioning of film at film cutting portion.

According to the twelfth feature of the invention, even execution of modifying process by position control means in case of monitor not clear, operator inputs unable-to-modify message because it is not able to input a modify command, position control means executes positioning nearest position between frames as new cut position setting on output-side of advancing path of film of cut position setting to cut film at cut predetermined number of frames.

For instance, in case that frame in between position of sixth and seventh is set as cutting position of certain film, as modifying process becomes unable-to-modify message, the nearest frame in between position on output-side of advancing path of film of cut position setting such as position between fifth and sixth frames will be set as new cut position setting at film cutting portion.

According to the thirteenth feature of the invention, position control means, identifying that if boundary frames of one or more frames been satisfactorily determined by boundary determining means, upon every advance of cut predetermined number of frames of film by advancing means, executes modifying process only in unsatisfactory situations. In other words, modifying process is executed in case of satisfactory determination of boundary only to frame boundary of two sides of the cut position setting or position near cut position setting identified. For a frame boundary positioned far from the cut position setting, frame number only can be identified without identification of satisfactory determination of boundary and execution of modifying process in unsatisfactory condition.

According to the fourteenth feature of the invention, at processing portion composed of exposure portion, process of film as photosensitive material, that executes exposure to printing paper of frame picture of film. At film cutting portion of same process portion, process of film as photosensitive material, that cut position setting between frames for separation of every cut predetermined number of frames of film.

To execute said process to film at these process portions, positioning of film is needed. In case that picture boundary determination by boundary determining means becomes unsatisfactory, position control means shows modify command on monitor for positioning at both process portions. So, the operator can execute process for positioning at both process portions while watching the monitor.

According to the fifteenth feature of the invention, position control means, as process for positioning at exposure portion, even that frame of picture boundary which is unable to be determined at boundary determining means continues, positioning is executed by advancing only setting quantity equivalent to one frame of film without modifying process if number of continued frame is within predetermined limit of frames. Modifying process will be executed if number of continued frames exceeds a predetermined limit. And the process for positioning at film cutting portion, upon every advance of cut predetermined number of frames by advancing means, identifying if boundary determining means determine frame boundary of one or more than one of serially arranged cut position setting, then modifying process will be executed only in unsatisfactory conditions.

In other words, at exposure portion with tolerance to positioning, even if boundary determining means cannot satisfactorily determine picture boundary, the frequency of executing the modifying process should be suppressed as much as possible to obtain more precise positioning at film cutting portion, modifying process will be executed in identifying satisfactory determination of boundary and unsatisfactory conditions to frame boundary near frame boundary of two sides of cut position setting. As to frame boundary at distant place from cut position setting, identification of satisfactory determination of boundary and number of frames in unsatisfactory condition without modifying process can be mode, then modifying process can be executed exactly while executing frequency is suppressed as much as possible, corresponding to structure of process portion.

According to the first feature, the operator can input a modify command for positioning at the processing portion of photosensitive material while watching monitor. Comparing this with input of modify command of position by directly watching position of photosensitive material at process portion, it makes operation of positioning at processing portion easy. Consequently the operating efficiency of the equipment is increased.

According to the second feature, the operator can input a modify command while referring position relationship between set position index on monitor and picture of its related frame. This makes operation easier for positioning at processing portion. Consequently, further improvement of operating efficiency of the equipment can be obtained.

According to the third feature, the operator can input a modify command while estimating the position of subject frames whose picture boundary is not satisfactorily determined, from the arranged plurality of picture frames on the monitor. This makes operation easier for positioning at processing portion. Consequently, further improvement of operating efficiency of the equipment can be obtained.

According to the fourth feature, even that input of modify command by watching the monitor is difficult, so ensuring by positioning visually at positioning stage (DS) can be considered as a remedy to an emergency situation. Thus the improved reliability of the equipment shows the effects of said first, second and third features.

According to the fifth feature, the photosensitive material can be removed from the advancing path before it reaches the process portion. This can be applied, for example, to the situation where the inability of the boundary determining means to determine satisfactorily the picture boundary continues abnormally. In such a case, the photosensitive material can be picked out before it is processed by the process portion. This can be considered as a remedy in a emergency situation and thus improves the reliability of the equipment.

According to the sixth feature, in case the input of the modify command by watching monitor is difficult, the photosensitive material will be discharged from the advancing path opening gate automatically without being processed by the process portion. This simplifies operation under the difficult condition of the input of the modify command.

According to the seventh feature, advancing quantity of photosensitive material at processing portion can be precisely controlled, so that positioning at processing portion can be exactly executed. Thus improving reliability of the equipment shows effects of said first, second, third, fourth, fifth and sixth features.

According to the eighth feature, the modify command can be done easily because it is easy to see the picture boundary on the monitor. Thus, further improvement of operating efficiency of the equipment can be achieved.

According to the ninth feature, film at the exposure portion is satisfactorily positioned due to said first, second, third, fourth, fifth, sixth, seventh and eighth features. It is able to expose the relevant part of the frame picture of the film to the printing paper satisfactorily.

According to the tenth feature, the trouble with the modifying process by position control means and the input of the modify command by operator can be reduced. This further improves the operating efficiency of the equipment.

According to the eleventh feature, the film at the film cutting portion is satisfactorily positioned due to first, second, third, fourth, fifth, sixth, seventh and eighth features, and can be cut at the cut position setting satisfactorily. This shows the effectiveness of first, second, third, fourth, fifth, sixth, seventh and eighth features.

According to the twelfth feature, even cutting at the cut position setting originally set may be difficult. Therefore, a new cut position setting is set. This is expected to smooth the operation for positioning at the film cutting portion. Thus the operating efficiency of the equipment can be further improved.

According to the thirteenth feature, the difficulties of the operations needed in the modifying process are reduced while the process of necessary positioning is exactly executed Thus operating efficiency of the equipment can be further improved.

According to the fourteenth feature, the operator can execute the process for positioning at both process portions while watching the monitor. Thus operating efficiency of the equipment can be further improved.

According to the fifteenth feature, the modifying process is executed according to the structure of process portion. Thus operating efficiency of the equipment can be further improved.

### Brief Description of the drawings

Preferred embodiments of the invention will be described in conjunction with the following Figures:

Fig. 1 is a schematic diagram of a system according to the invention.

Fig. 2(a) is a plan view of a sample film being considered.

Fig. 2(b) is a diagram of the corresponding signals to Fig. 2(a).

Fig. 2(c) is a diagram of the corresponding signals to Fig. 2(b).

Fig. 3 is a flow chart of the logic operations of the invention.

Fig. 4 is a continuation of the flowchart of Fig. 3.

Fig. 5(a) is a monitor display.

Fig. 5(b) is a monitor display.

Fig. 6 is a monitor display.

Fig. 7 is a monitor display.

Fig. 8 is a monitor display.

### Detailed description of the preferred embodiment

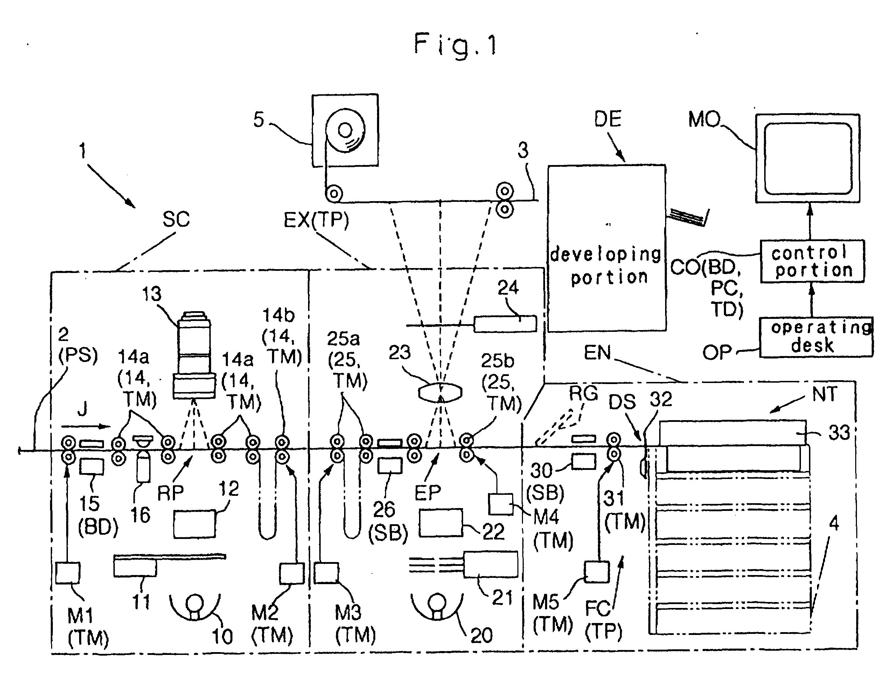

Fig. 1 shows a photographic printer 1 There is scanner portion SC to read picture of photographic film 2 (as an example of photosensitive material PS), which has thereon recorded serially a plurality of picture frames. There is exposure portion EX to expose picture on film 2 to printing paper 3 and negative sheets storage portion EN to store negative sheets 4 which are cut after each six frames of film 2 is exposed. There is developing portion DE to develop exposed picture on film 2 onto printing paper 3 and control portion CO to control each portion. The circuit diagrams for control portion CO and other portions are not shown for ease of readability.

Scanner portion SC comprises scanning light source 10, ND filter 11 which can vary the amount of transmitted light it passes through or some other contrast adjusting means, mirror tunnel 12 to uniformly transmit light emerging from ND filter 11, and CCD image sensor unit 13 which is aligned with the illumination axis of light from tunnel 12. There are advancing rollers 14 to advance film 2 in the direction of arrow J across the light axis between tunnel 12 and sensor unit 13. As film 2 is advanced along the advancing path, picture detector 15 formed by transmitted type light sensor, detects the edge portion of picture and DX sensor 16 reads the DX code recorded in film 2.

ND filter 11, as described later, when the modify command for positioning of film 2 appears on monitor MO, provides contrast adjusting means functions to adjust contrast between frame picture part and outside picture part. CCD image sensor unit 13 measures light quantity and adjusts the quantity. For example, contrast adjustment is done by processing the signal read by CCD image sensor unit 13. Accordingly, more effective contrast adjustment can be achieved.

CCD image sensor unit 13 has a CCD image sensor and a lens system for imaging a picture of film 2 onto CCD image sensor and splitting the picture on film 2 into several areas, and reading density information of the three basic colors in each area.

Within advancing rollers 14 are advancing rollers 14b positioned at most output-side of advancing path of film 2, which is driven by pulse motor M2, and advancing rollers 14a which is gear-driven by pulse motor M1. A loop of film 2 can be formed on input-side of advancing rollers 14b of most output-side by gear-driven pulse motor M1 and pulse motor M2.

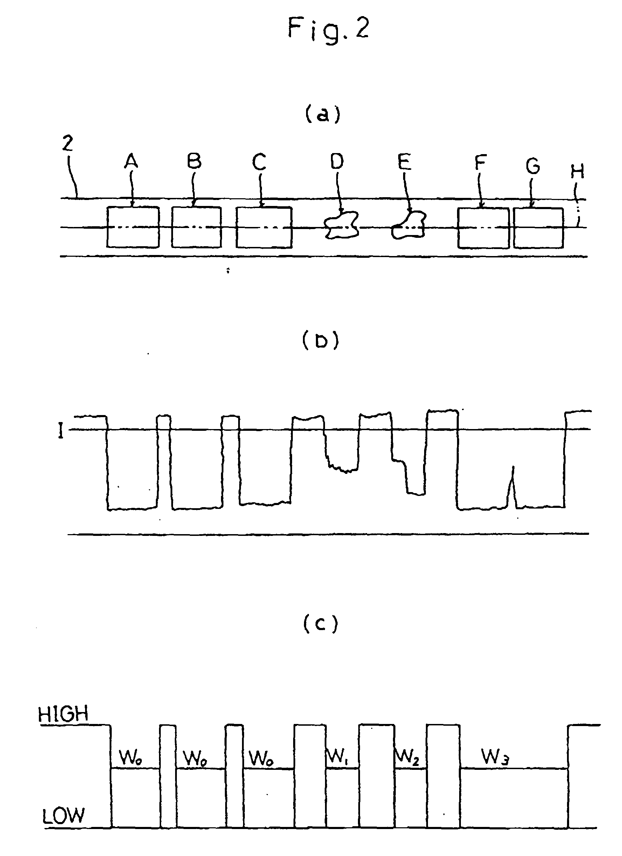

Picture detector 15, for instance, detects the boundary picture between frames A to G serially arranged as shown in Fig. 2(a). Frames A to C were taken with standard exposure and arranged with satisfactory spacing. Frames D and E show that the density difference is not clear between surrounding part and other part of frame due to underexposure. Frames F and G were taken with standard exposure but with extremely narrow spacing. The transmitted quantity of light is measured along with the central line of Fig. 2(a). Picture detector 15 will output the signal shown in Fig. 2(b) for the picture frames of Fig. 2(a).

The detected information of picture detector 15 is sent to control portion CO, which then compares the advanced signal against the standard value shown as straight line "I" of Fig. 2(b), transmitted light under standard value as "L" level shows transmitted density over standard value; and transmitted light over standard value as "H" level showing transmitted density under standard value, to obtain the signals shown in Fig. 2(c) in two-value form.

Fig. 2(c), where frames A to C are taken with standard exposure and satisfactory spacing arrangement, specifies width W0 to be equivalent to the width of one standard frame along advancing direction of film 2. But in frames D and E, the density difference between surrounding part and other part is not clear due to underexposure. so widths W1 and W2 of "L" level are narrower than WO. And frames of F and G were taken on standard exposure condition but with extremely narrow spacing between those two frames. The part between frames F and G cannot be clearly determined and so width W3 of "L" level is wider than W0.

Control portion CO will judge a picture boundary as being satisfactorily determined if this "L" level width is within a set range, that range being centered 5 about the width of one standard frame picture along the advancing direction of film 2. Determination of picture boundary will be judged as unsatisfactory if it is outside the set range. Consequently, picture detector 15 and control portion CO act as boundary determining means BD to determine the picture boundary between adjacent frames.

When film 2 is inserted into scanner portion SC, frame by frame by advancing rollers 14, the picture will be read at picture information reading position RP. This reading of film 2 continues until one order is finished, and the pictures read are sent to control portion CO for determination of exposure condition at exposure portion EX. The portion of film 2 which has been read, is then formed in loop and stored at input-side place of advancing rollers 14 on most output-side.

Position control of advancing direction of film 2 to place satisfactorily picture part of film at picture information reading position RP, will be executed by control portion CO based on detected information at picture detector 15 as described later. The left/right direction of the advancing direction of film 2 will be regulated by a guide (not shown).

As a part of processing portion TP. exposure portion EX exposes advanced film 2. Exposure portion EX comprises exposure light source 20, modulating filter 21 equipped with each color filter of Y (yellow), M(magenta), C(cyan) adjusting color balance of emitting light from exposure light source 20, mirror tunnel 22 mixing uniformly passing light of modulator filter 21, zoom lens 23 forming picture on printing paper 3 of film 2 and shutter 24 on same light axis. Advancing rollers 25 is equipped to advance film 2 in the direction of arrow J to cross the light axis between mirror tunnel 22 and zoom lens 23. There is a position detector 26 formed by transmitted type light sensor for position determining of film 2 along its advancing path.

Part of advancing rollers 25 is advancing rollers 25a placed at the input-side of advancing path of film 2 and driven by pulse motor M3. Another advancing rollers 25b is gear-driven by pulse motor M4. M3 and M4 drive independently so that film 2 can be formed in a loop at output-side of advancing rollers 25a of most input-side.

After finishing the picture reading at scanner portion SC, film 2 is delivered to exposure portion EX, and is formed in a loop and stored at output-side place of advancing rollers 25 on most input-side, advancing to exposure position EP frame by frame sequentially. Regarding positioning of picture part of film 2 at exposure position EP, position of left/right direction to advancing direction of film 2 is regulated by a guide (not shown), so that position control of the advancing direction of film 2 is needed. This position control (to be described later), is provided by positioning control means based on detected information of picture detector 15.

Frame of film 2 placed at exposure portion EP is then exposed on printing paper 3 pulled from printing paper magazine 5. The exposure condition set by control portion CO through regulating filter 21 and shutter 24, is based on density information of picture on that frame on printing paper 3.

Negative sheet storing portion EN includes a film cutting portion FC and a negative sheet advancing portion NT. Film cutting portion FC is part of the processing portion TP and cuts every six frames of advanced film 2. Film cutting portion FC has a transmitted type light sensor along the advancing path of film 2, position detector 30 for determining the position of film 2, advancing rollers 31 driven by pulse motor M5, film cutter 32 for cutting (every six) frames of film 2. On the input-side position of advancing path of film 2 of negative sheet storing portion EN (that is, the input-side of position detector 30), the removal of film 2 from its advancing path is effected by advancing path opening gate RG of the swingable type. Advancing path opening gate RG is switchable between an advancing state and a discharging state. In the advancing state, gate RG guides film 2 towards negative sheet storing portion EN. In the discharging state (as shown in dotted lines in Fig. 1), gate RG, swung upwardly, opens for removal of film 2.

Negative sheet advancing portion NT includes a negative sheet storing portion (not shown) from which negative sheets 4 are pulled from in the advanced direction of film 2. Negative sheet cutter 33 cuts advanced negative sheet 4 stepwise in a direction perpendicular to the direction of film 2.

Upon finishing exposure at exposure portion EX, film advanced to negative sheet storing portion EN will be inserted to negative sheets 4 advanced in direction perpendicular with advancing direction of film 2 and cut in units of six continuous frames by film cutter 32. This positioning of cut needs positioning control in advancing direction of film 2. And this positioning control will be executed based on detected information of picture detector 15 by control portion CO which functions as position control means PC as described later.

Negative sheets 4, upon being advanced in step by step condition with insertion of film 2 at its each step, will be then cut into each order by negative sheet cutter 33 equipped on the negative sheet advancing path.

As described above, film 2 inserted at scanner portion SC is sequentially advanced from scanner portion SC until negative sheet inserting portion EN by pulse motors M1, M2, M3, M4, M5 and advancing rollers 14, 25 and 31 functioning as advancing means TM to advance film 2.

Developing portion DE has plural tanks (not shown) filled with processing solution to develop printing paper 3 after exposure. Printing paper 3 is developed by sequentially passing through plural tanks.

As described above, control portion CO controls each of the following portions: exposure condition setting at exposure portion EX, picture reading position RP of scanner portion SC, exposure position EP and positioning of cut setting place at film cutter 32 of negative sheet storing portion EN.

Exposure condition is set based on density information of picture of film 2 read at scanner portion SC as inserting quantity to exposing light path of each color filter of regulating filter and opening duration of shutter 24 at exposure portion EX.

Then picture on printing paper 3 exposed at setting exposure condition is simulated and showed on monitor. Operator, watching simulated picture on monitor MO, judges if exposure condition by input of modify command from operating desk is necessary.

Positioning of picture information reading position RP, exposure position EP and cut setting place of film 2 is executed based on information of boundary determining means BD and advanced quantity of film 2.

Advanced quantity of film 2 is determined by transmitting pulse number to each pulse motor M1, M2, M3, M4 and M5 from control portion CO. Control portion CO acts as function of advanced quantity determining means TD to determine advanced quantity of film 2 by advancing means TM.

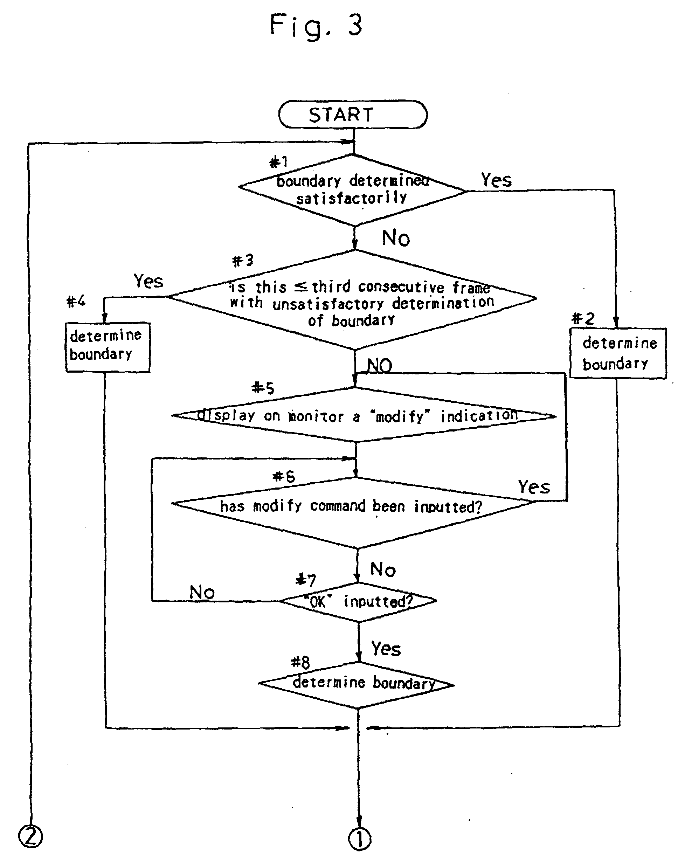

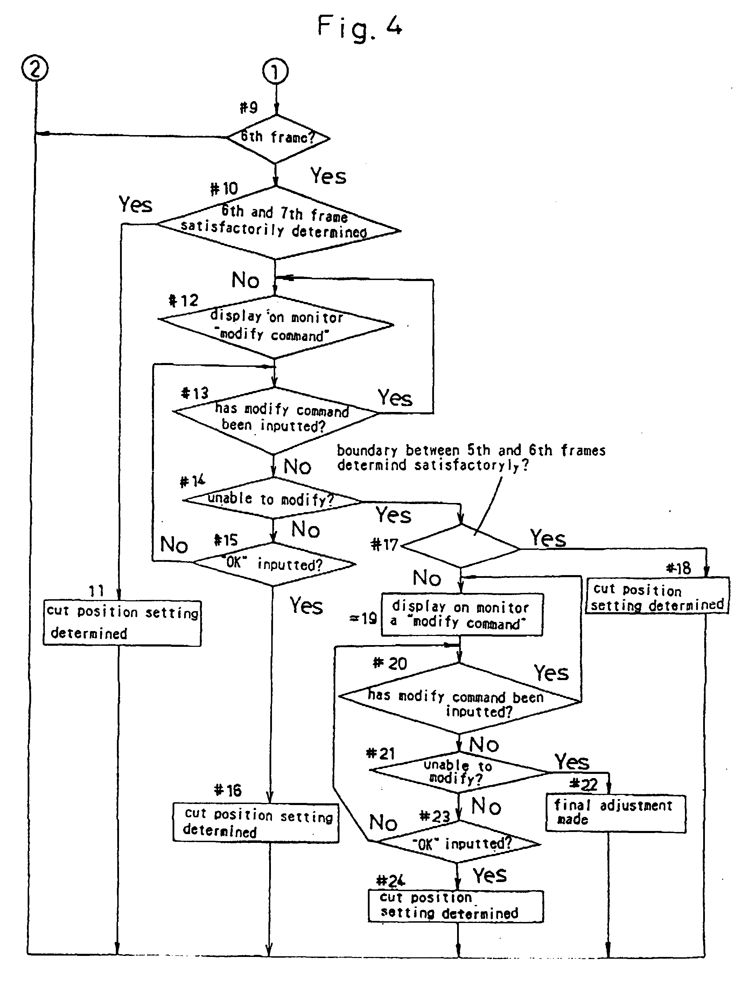

Following the flow chart of Figs. 3 and 4, positioning process by control portion CO will be described.

First, if the picture boundary has been satisfactorily determined (step 1), based on determined signal shown in Fig. 2(c) (i.e. advanced quantity of film 2 corresponding to positions of down to "L" level from "H" level and up to "H" level from "L" level), then to determine boundary (step 2) identified as coordinates of picture boundary of film 2. These coordinates can be shown by referring to the front edge or edge part of picture of front frame of film 2.

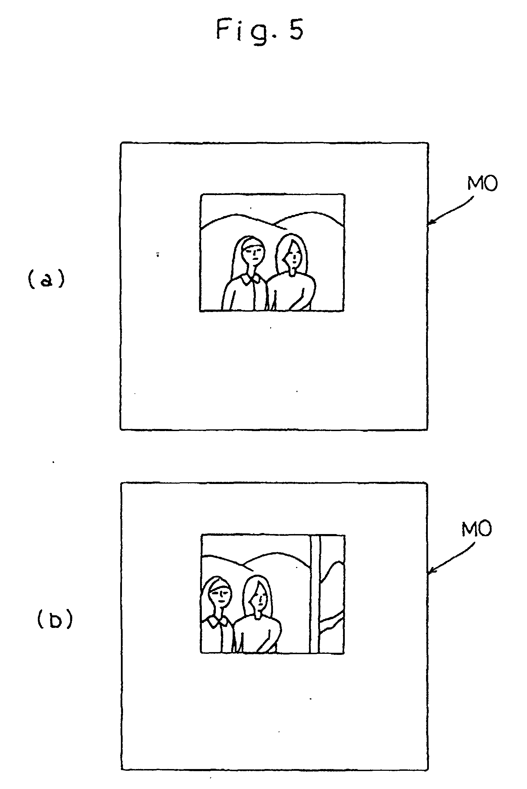

If a boundary cannot be determined satisfactorily, then it will be assumed that one standard frame is present and film 2 will be advanced forward one standard amount. This will occur while the number of continuous frames for which a boundary cannot be determined satisfactorily, is three or less (steps 3 and 4 in Fig. 3). In case of the fourth such continuous frame, then a picture of it will be taken at RP and it and a suitable message will displayed by the monitor (MO) (step 5 in Fig. 3; and Fig. 5)

While monitor MO displays subject part of frame picture of film 2 as shown in Fig. 5(a), operator just inputs "OK" without the need of inputting a modify command from operating desk OP. While monitor MO, as shown in Fig. 5(b), displays a part which should not show up, input of a modify command from operating desk OP to move film 2 in the desired direction until a satisfactory, condition as shown in Fig. 5(a) is achieved. Control portion CO drives pulse motor M1 corresponding to its input, renewing indication for modify by changing position of film 2. With an "OK" input, it is determined that picture boundary is moved by modify command (steps 5-8).

Meanwhile, by moving ND filter 11 of scanner portion SC on command of operating desk OP, light quantity on film 2 can be adjusted. Operator makes contrast between other part showing on display of monitor MO and picture part clear and adjusts light quantity to read it easily.

Upon determining picture boundary, positioning of cut setting place of film 2 is executed on every six frames in principle. If the sixth frame from the last cut position setting is set, the process for determining the following cut position setting will be executed. The process returns to step 1 if it is not yet the sixth frame (step 9).

In case the picture boundary between the sixth and seventh frames is satisfactorily determined, the cut position will be set in the middle of the part between the rear end boundary of sixth frame and the front end boundary of seventh frame (steps 10, 11). Then there is a return to step 1.

If the picture boundary of the sixth or seventh frames or both is unsatisfactory (step 10), the operator executes the process of cut position setting by doing the following.

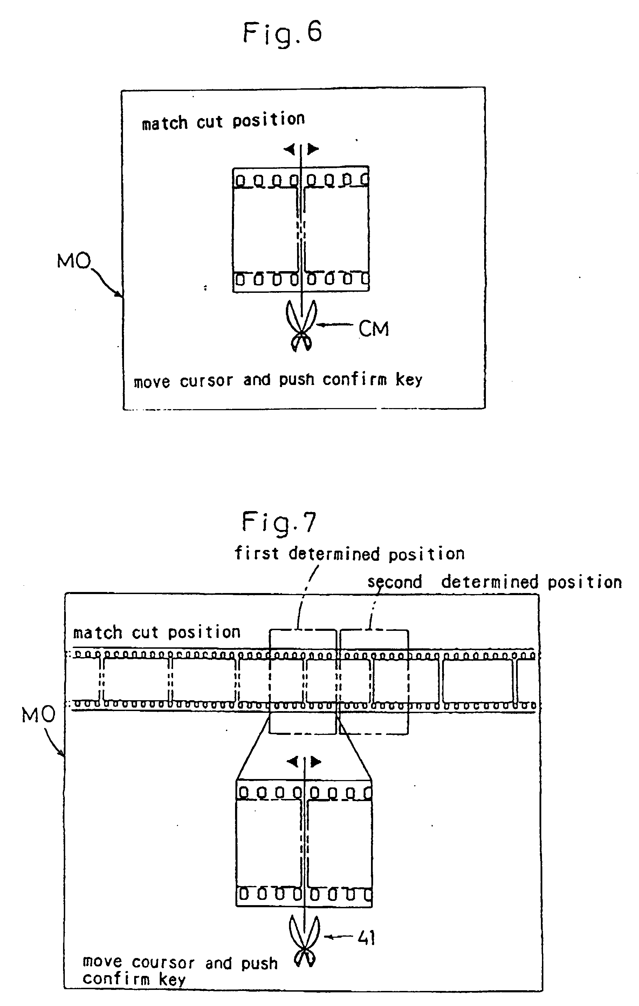

The place assumed as the unclear part between the sixth and seventh frames of the advanced quantity of film 2, is put at the center of the picture information reading means RP and taken by image sensor unit 13, as shown in Fig 6. The modifying process shown on monitor MO will be executed with cut mark CM shown at cut position setting on advanced quantity of film 2 (step 12).

Operator, watching display of monitor MO, inputs a modify command from operating desk OP until cut mark CM reaches the desired position (step 13). Control portion CO, then moves cut mark CM on monitor MO corresponding to the input of modify command (step 12).

As operator inputs "OK" from operating desk OP (step 15) by moving cut mark CM to the desired position, control portion CO then determines the coordinates of cut position setting at cut mark CM.

Meanwhile, similarly to the process for positioning at picture information reading position RP and exposure position EP, light quantity onto film 2 can be adjusted by moving ND filter 11 of scanner portion SC upon operator commands from operating desk OP. Operator can adjust the light quantity to see easily the unclear part between the sixth and seventh frames shown on display of monitor MO.

The above situation relates to the situation where the unclear part between sixth and seventh frames can be identified. If that part cannot be identified even after adjustment of light quantity by moving ND filter 11, upon input of unable-to-modify message from operating desk OP by operator (step 14) and the satisfactory determination of the boundaries of the fifth and sixth frames (step 17) is considered. In case both boundaries are satisfactory, the central part between fifth and sixth frames is set as the cut position setting (step 18).

If for either the fifth or sixth frames or both, determination of picture boundary is unsatisfactory, cut position setting should be set at unclear part between fifth and sixth frames, film 2 is reversed one frame, and the same process above described is executed for the setting of cut position setting between the sixth and seventh frames (steps 19-24).

If operator cannot determine unclear part between fifth and sixth frames even by adjusting light quantity with movement of ND filter 11, he inputs unable-to-modify message from operating desk OP (step 21), and then stops process for cut position setting determination on monitor MO. The part between the sixth and seventh frames which had been estimated originally as the cut position setting will be registered as the final visual adjustment place directly. There is then a return to step 1 and the processing of the next frame. Moreover, this unable-to-modify place registered as the final adjustment place will be transferred to the location of film cutter 32 of negative sheet storing portion EN at advancing means TM based on indication of control portion CO, and stopped automatically. Therefore, operating desk OP acts based on the modify input means receiving an input modify command to positioning of film 2 by position control means PC.

Picture boundary is determined as described above, and upon cut position setting being set, advancing means TM will advance film 2 according to coordinates information of detected picture boundary. A picture of satisfactorily positioned film 2 is read at picture information reading position RP. A picture of satisfactorily positioned film 2 is exposed to printing paper 3 at exposure position EP. Advancing, means TM advances film 2 positioned by coordinates information of set cut position setting, and film 2 is cut at a satisfactorily positioned cut position setting at position of film cutter 32 in negative sheet storing portion EN. At this point, position detector 26 in exposure portion EX and position detector 30 in negative sheet storing portion EN detect the same signal as shown in Fig. 2. Control portion CO compares the detected information of position detector 26 or 30 with set coordinates information of picture boundary and determines the difference between the advanced quantity determined by picture detector 15 and that determined by position detector 26 or 30. Advancing will be stopped and the necessary process of modifying advanced quantity if the actual advanced quantity is bigger than a set value. Accordingly, position detectors 26 and 30 function as auxiliary boundary determining means SB to determine the picture boundary between adjacent frames equipped at immediate input-side of process portion TP.

On the other hand, upon a final adjustment registration by control portion CO (at step 22), the operator visually stops film cutter 32 and positions for cutting by film cutter 32. Consequently, by setting film 2 by eye relative to the position of film cutter 32 of negative sheet storing portion EN, that position functions as a position deciding stage.

In case the operator feels uneasy about the positioning process about too many frames whose boundaries were unsatisfactorily determined or the cutting function not performed well, then film 2 can be picked from its advancing path before film cutter 32 by command from operating desk OP to swing open the advancing path opening gate RG placed at the input-side of position detector 30 in negative sheet storing portion EN.

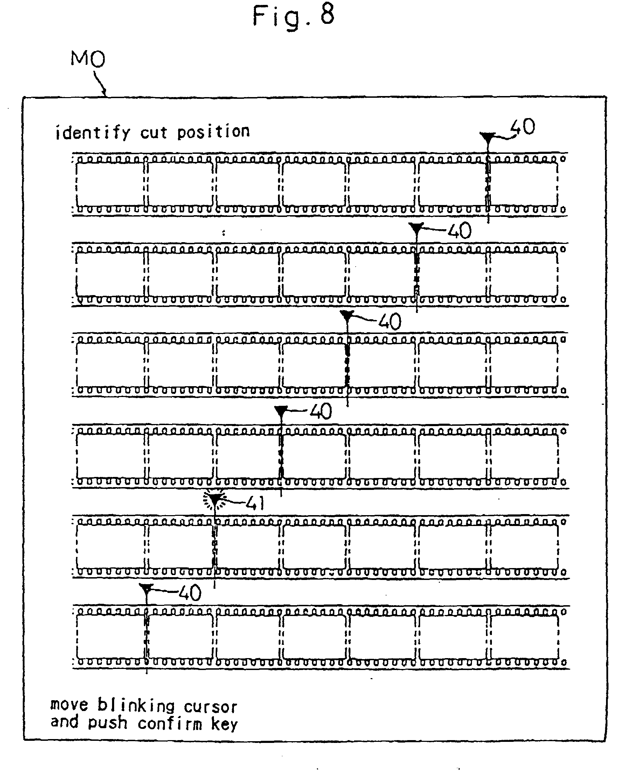

Other embodiments include the following.
(1) In above-described embodiment, during determination of cut position setting of film 2 in case that picture boundary cannot be determined satisfactorily at boundary determining means BD, set place as cut position setting is shown on monitor MO. Two modes are possible: the operator moves cut mark CM showing cut position setting to determine cut position or cut mark CM is fixed and film 2 is moved by operator command.
(2) In above-described embodiment, during setting of cut position setting of film 2 in case that picture boundary cannot be determined satisfactorily at boundary determining means BD, regarding display on monitor MO of setting place set as cut position setting, although showing each a part before and after frame of estimating place as cut position setting, it is permissible to determine cutting position by reading the picture of six frames as shown in Fig. 7 or by showing frames of one order as shown in Fig. 8.
   As shown in Fig. 7, on indication of six frames quantity positioned before and after (i.e. about the) modify position index 41 showing the estimated position as cut position setting from advanced quantity of film 2, set as first set position between sixth and seventh frames, set as second set position between fifth and sixth frames, it is switchable to set position of cut position setting at second set position if cut position determination at first set position (shown in enlarged condition) is difficult. And, number of frames in this indicating condition is changeable satisfactorily.
   Further, on frame indication of quantity of one order as shown in Fig. 8, boundary of picture determined satisfactorily at boundary determining means BD, set position index 40 showing determined position as cut position setting and estimating advanced quantity of film 2 which cannot be determined boundary picture at boundary determining means BD, operator shows modify position index 41 indicated by blinking cursor for necessary determination of cut position setting. And, this indicating condition is not limited to show picture of one order. It is suitable with any range of frames which includes both set position index 40 and modify position index 41.
   Operator, in either case of above-described, inputs a modify command from operating desk OP to move the modify position index 41 to the part between adjacent frames, and sets cut position setting therein.
   Indicating states of above-shown in Figs. 7 and 8 can also be adapted to position control for positioning at exposure means EX. In this locating control, instead of cut mark CM in Fig. 7 and modify position index 41 in Fig. 8, showing picture part of frame or exposed territory at exposure position EP of film 2, it is permissible to input modify command by moving indicating position of rectangular frame from operating desk OP.
   And, indicating states shown in Figs. 7 and 8, after scanner SC reads picture of one order's quantity or plural frames quantity, it means that process of above-described positioning has been executed.
(3) In above-described embodiment, exposure portion EX and scanner portion SC are equipped independently, but by means of moveable reflective mirror etc. to light path for exposure at exposure portion EX to branch out light after getting through film 2, CD image sensor unit 13 is constructed to guide it. It is permissible to construct exposure portion EX and scanner portion SC together in one body.
(4) In above-described embodiment, process portion TP is composed of both exposure portion EX and film cutter FC of negative sheet storing portion EN but it is also permissible to be equipped with only one of them.
(5) In above-described embodiment, control portion CO itself acts as function of advanced quantity determining means TD to determine conveyed quantity by number of pulses sent from control portion CO to each composing component of advancing means TM, pulse motors M1, M2, M3, M4 and M5, it is also permissible with construction to determine advanced quantity of film 2 by number of rotations of above-described motors with a rotary encoder, etc. as advanced quantity determining means TD.
(6) In above-described embodiment, regarding positioning at scanner portion SC and exposure portion EX, it is so constructed that setting quantity will be transmitted if frame which cannot be satisfactorily determined picture boundary by boundary determining means BD continues within three, but this setting number of frames is changeable.
(7) In above-described embodiment, the amount of light to ND filter 11 can be adjusted as function of contrast adjusting means. It is permissible to construct that to adjust focus of CCD image sensor unit 13 to adjust light amount, or to adjust light measuring time of CCD image sensor unit 13 to adjust equivalently light amount measured by CCD image sensor unit 13. And it is also permissible to construct that to adjust contrast by processing picture information read at CCD image sensor unit 13.
(8) In above-described embodiment, film 2 is an example of photosensitive material PS. It is permissible to treat printing paper in shape of continued sheet of finished exposure as photosensitive material PS and to adapt the invention to cutting equipment of printing paper of finished exposure.
(9) In above-described embodiment, operator, cannot identify unclear part by watching display on monitor MO, and although it is so constructed to transmit its unable-to-position place to positioning stage (DS) upon input of unable-to-modify message from operating desk OP, it is so controlled by control portion CO that film 2 for modifying process will be transmitted to gate RG when there is input of unable-to-modify message further. It is also permissible to construct that film 2 will be discharged from advancing path by switching from advance-state to discharge-state.

While a particular embodiment of the invention has been disclosed, it is to be understood that various different modifications are possible and are contemplated as being within the scope of the invention as defined in the claims.

## Claims

1. Photosensitive material processing equipment (1) comprising:
(a) advancing means (TM; 14, 25, 31) for advancing photosensitive material (2) having recorded thereon a plurality of picture frames (A-G);
(b) advanced quantity determining means (TD; 15) for determining the quantity of photosensitive material that has been advanced;
(c) boundary determining means (BD; 26) for determining the picture boundary between adjacent picture frames on said photosensitive material advanced by said advancing means;
(d) processing means (EX; 20, 21, 22, 23, 24) for exposing images of the picture frames of said photosensitive material (2) onto photographic paper;
(e) position control means (PC) for determining and controlling the position of said photosensitive material with respect to said processing means based upon information determined by said advanced quantity determining means and said boundary determining means;
(f) modification input means (OP) for manually inputting a modify command for modifying the position of said photosensitive material determined and controlled by said position control means;
(g) picture reading means (RP; 13) for reading pictures of said photosensitive material on the input side of said processing means; characterised by
(h) monitor (MO) for displaying information read by said picture reading means (RP; 13); wherein the position control means (PC) is arranged to determine whether the determination of the picture boundary by said boundary determining means (BD;26) is satisfactory or unsatisfactory, and when said determination is unsatisfactory the position control means performs a modifying process in which the monitor, based on information read by said picture reading means, displays an indication to modify by means of said modification input means the position of the photosensitive material, with respect to said processing means.

2. Equipment as claimed in claim 1, wherein when said position control means (PC) determines that said boundary determination is unsatisfactory, the position control means displays on said monitor (MO): i) a modify position index (41) and ii) a set position index (42) based on information of the picture boundary read by said picture reading means (RP; 13) and determined by said boundary determining means.

3. Equipment as claimed in claim 1 wherein said position control means (PC), when said boundary determining means (BD; 23) has made an unsatisfactory determination during the execution of said modifying process, displays on said monitor (MO) the preceding and the following positioned picture frames based upon information read by said picture reading means (RP,13) with a modify position index (41) according to the advanced quantity of photosensitive material (2).

4. Equipment as claimed in claims 1 to 3, further comprising a positioning stage (DS) for visual determination of the position of said photosensitive material (2), wherein when said position control means (PC) has received an unable-to-modify message input at its modifying process execution, said position control means controls said advancing means (TM; 14, 25, 31) to advance an area of said photosensitive material (2) of which said position is not determined and to automatically stop said advancing means at the positioning stage.

5. Equipment as claimed in claims 1 to 4, further including an advancing path opening gate (RG) at an input side of said processing means (EX; 20-24) on the advancing path of said photosensitive material (2), which is switchable between two states, an advancing state where said photosensitive material can be advanced towards said processing means, and a discharging state where photosensitive material can be removed from the advancing path.

6. Equipment as claimed in claim 5, wherein said position control means (PC), upon executing said modifying process, advances said photosensitive material (2) to said gate (RG) upon the input of an unable-to-modify message and switches the gate from said advancing state to said discharging state.

7. Equipment as claimed in claims 1 to 6, further comprising auxiliary boundary determining means (26, 30) for determining the picture boundary between adjacent frames of said photosensitive material (2) at an input side initial position of said processing means (EX; 20-24) of advancing path of photosensitive material, and said position control means (PC) compares determined information between said boundary determining means (BD; 26) and said auxiliary boundary determining means to detect the difference of advanced quantity of photosensitive material at each determining place.

8. Equipment as claimed in any one of claims 1 to 7, further comprising contrast adjusting means (11) for adjusting picture contrast based on information read by said picture reading means (RP; 13) and displayed on said monitor (MO).

9. Equipment as claimed in in any one of claims 1 to 8, wherein said photosensitive material (2) is a film and said processing means (EX; 20-24) has a projection exposure portion for exposing the picture of film position set by said position control means (PC) onto photographic paper.

10. Equipment as claimed in claim 9, wherein said position control means (PC) executes said modifying process as the number of adjacent frames for which a boundary cannot be satisfactorily determined by said boundary determining means (BD; 26) continues over a predetermined limit; and said position control means controls said advancing means (TM; 14, 25, 31) to determine the position by advancing said photosensitive material a quantity equivalent to one frame only of film as the number of frames having a boundary unsatisfactorily determined by said boundary determining means continue within said predetermined limit.

11. Equipment as claimed in any one of claims 1 to 8, wherein said photosensitive material (2) is film and said processing means (EX; 20-24) has a film cutting portion (FC) for cutting between a frame and an adjacent frame at a position determined by said position control means (PC), and to separate film (2) at every predetermined number of frames for cutting of film (2).

12. Equipment as claimed in claim 11, wherein upon an unable-to-modify input message at said position control means (PC) and during execution of said modifying process, the position between frames nearest the output-side of the advancing path of film to the predetermined cutting position is set as the new set cutting position by said control means.

13. Equipment as claimed in one of claims 11 and 12, wherein said position control means (PC) determines whether there has been a satisfactory determination by said boundary determining means (BD,26) of the boundary of a pre-set number of advancing frames from said cut position, and executes the modifying process only if the boundary determination of one or more of the preceding or following frames is unsatisfactory.

14. Equipment as claimed in any one of claims 1 to 8, wherein said photosensitive material (2) is film and said processing means (EX; 20-24) is constructed with an exposure portion for exposing a picture of a film onto photographic paper, and including a film cutting portion (FC) for cutting the film at a predetermined position between adjacent frames of the film.

15. Equipment as claimed in claim 14, wherein said position control means (PC) executes said modifying process as the number of continuous frames for which a boundary cannot be satisfactorily determined by said boundary determining means (BD,26) continues over a predetermined limit; and said position control means controls said advancing means (TM; 14, 25, 31) to determine the position by advancing said photosensitive material a quantity equivalent to one frame only of film as the number of frames having a boundary unsatisfactorily determined by said boundary determining means continue within said predetermined limit, said position control means (PC) determines whether there has been a satisfactory determination by said boundary determining means (BD: 26) of the boundary of a pre-set number of advancing frames from said cut position, and executes the modifying process only if the boundary determination of one or more of the preceding or following frames is unsatisfactory.

## Patentansprüche

1. Ausrüstung (1) zum Verarbeiten von lichtempfindlichem Material, aufweisend:
(a) Vorschubmittel (TM; 14, 25, 31) zum Vorschieben von lichtempfindlichem Material (2), auf dem eine Vielzahl von Bildrahmen (A-G) aufgezeichnet ist;
(b) Vorschubmengen-Bestimmungsmittel (TD; 15) zum Bestimmen der Menge von lichtempfindlichem Material, die vorgeschoben wurde;
(c) Grenzbestimmungsmittel (BD; 26) zum Bestimmen der Bildgrenze zwischen benachbarten Bildrahmen auf dem durch die Vorschubmittel vorgeschobenen, lichtempfindlichen Material;
(d) Verarbeitungsmittel (EX; 20, 21, 22, 23, 24) zum Projizieren der Bilder in den Bildrahmen des lichtempfindlichen Materials (2) auf Photopapier;
(e) Positionssteuermittel (PC) zum Bestimmen und Steuern der Position des lichtempfindlichen Materials bezüglich der Verarbeitungsmittel aufgrund der von den Vorschubmengen-Bestimmungsmitteln und den Grenzbestimmungsmitteln bestimmten Information;
(f) Änderungseingabemittel (OP) zum manuellen Eingeben eines Änderungsbefehls, um die durch die Positionssteuermittel bestimmte und gesteuerte Position des lichtempfindlichen Materials zu ändern;
(g) Bildlesemittel (RP; 13), zum Lesen der Bilder des lichtempfindlichen Materials auf der Eingangsseite der Verarbeitungsmittel; gekennzeichnet durch:
(h) einen Monitor (MO) zum Wiedergeben der von den Bildlesemitteln (RP; 13) gelesenen Information; wobei die Positionssteuermittel (PC) ausgelegt sind, um festzustellen, ob die Bestimmung der Bildgrenze durch die Grenzbestimmungsmittel (BD; 26) zufriedenstellend oder nicht zufriedenstellend ist, und wenn die Bestimmung nicht zufriedenstellend ist, führen die Positionssteuermittel einen Änderungsprozeß aus, bei dem der Monitor aufgrund der von den Bildlesemitteln gelesenen Information eine Meldung wiedergibt, um mittels der Änderungseingabemittel die Position des lichtempfindlichen Materials bezüglich der Verarbeitungsmittel zu ändern.

2. Ausrüstung wie in Anspruch 1 beansprucht, wobei dann, wenn die Positionssteuermittel (PC) feststellen, daß die Grenzbestimmung nicht zufriedenstellend ist, die Positionssteuermittel aufgrund der Information über die von den Bildlesemitteln (RP; 13) gelesene und von den Grenzbestimmungsmitteln bestimmte Bildgrenze: i) einen Positionsänderungsindex (41) und ii) einen Positionseinstellindex (42) auf dem Monitor (MO) wiedergeben.

3. Ausrüstung wie in Anspruch 1 beansprucht, wobei die Positionssteuermittel (PC) dann, wenn die Grenzbestimmungsmittel (BD; 23) während der Ausführung des Änderungsprozesses eine nicht zufriedenstellende Bestimmung gemacht haben, den davor und den danach positionierten Bildrahmen aufgrund der von den Bildlesemitteln (RP; 13) gelesenen Information mit einem Positionsänderungsindex (41) gemäß der vorgeschobenen Menge des lichtempfindlichen Materials (2) auf dem Monitor (MO) wiedergeben.

4. Ausrüstung wie in den Ansprüchen 1 bis 3 beansprucht, die weiterhin eine Positionierungsstufe (DS) aufweist zur visuellen Bestimmung der Position des lichtempfindlichen Materials (2), wobei dann, wenn die Positionssteuermittel (PC) bei ihrer Prozeßänderungsausführung eine Nichtänderbarkeitsmitteilungs-Eingabe erhalten haben, die Positionssteuermittel die Vorschubmittel (TM; 14, 25, 31) so steuern, daß das Gebiet des lichtempfindlichen Materials (2), dessen Position nicht bestimmt ist, vorgeschoben wird, und die Vorschubmittel bei der Positionierungsstufe automatisch angehalten werden.

5. Ausrüstung wie in den Ansprüchen 1 bis 4 beansprucht, die weiterhin auf der Eingangsseite der Verarbeitungsmittel (EX; 20-24) auf dem Vorschubpfad des lichtempfindlichen Materials (2) ein Vorschubpfad-Tor (RG) umfaßt, das zwischen zwei Zuständen umschaltbar ist, nämlich einem Vorschubzustand, in dem das lichtempfindliche Material zu den Verarbeitungsmitteln hin vorgeschoben werden kann, und einen Entladezustand, in dem das lichtempfindliche Material aus dem Vorschubpfad herausgenommen werden kann.

6. Ausrüstung wie in Anspruch 5 beansprucht, wobei die Positionssteuermittel (PC) beim Ausführen des Änderungsprozesses das lichtempfindliche Material (2) bei der Eingabe einer Nichtänderbarkeitsmitteilung bis zu dem Tor (RG) vorschieben und das Tor von dem Vorschubzustand nach dem Entladezustand umschalten.

7. Ausrüstung wie in Anspruch 1 bis 6 beansprucht, die weiterhin Hilfs-Grenzbestimmungsmittel (26, 30) aufweist, um die Bildgrenze zwischen benachbarten Rahmen bei dem lichtempfindlichen Material (2) bei der anfänglichen Eingangsseitenposition der Verarbeitungsmittel (EX; 20-24) des Vorschubpfades des lichtempfindlichen Materials zu bestimmen, und wobei die Positionssteuermittel (PC) die bei den Grenzbestimmungsmitteln (BD; 26) und den Hilfs-Grenzbestimmungsmitteln bestimmte Information vergleichen, um die Differenz der vorgeschobenen Menge von lichtempfindlichem Material bei jeder Bestimmungsstelle zu erfassen.

8. Ausrüstung wie in irgendeinem der Ansprüche 1 bis 7 beansprucht, die weiterhin Konstrasteinstellmittel (11) aufweist, um aufgrund der von den Bildlesemitteln (RP; 13) gelesenen und auf dem Monitor (MO) wiedergegebenen Information den Bildkontrast einzustellen.

9. Ausrüstung wie in irgendeinem der Ansprüche 1 bis 8 beansprucht, wobei das lichtempfindliche Material (2) ein Film ist, und die Verarbeitungsmittel (EX; 20-24) einen Projektionsbelichtungsbereich haben, um das Bild bei der von den Positionssteuermitteln (PC) eingestellten Filmposition auf Photopapier zu projizieren.

10. Ausrüstung wie in Anspruch 9 beansprucht, wobei die Positionssteuermittel (PC) den Änderungsprozeß ausführen, wenn die Anzahl von benachbarten Rahmen, bei denen durch die Grenzbestimmungsmittel (BD; 26) eine Grenze nicht zufriedenstellend bestimmt werden kann, über einen vorgegebene Grenzwert hinausgeht; und die Positionssteuermittel die Vorschubmittel (TM; 14, 25, 31) steuern, um durch Vorschieben des lichtempfindlichen Materials um eine nur einem Rahmen des Films entsprechende Menge die Position zu bestimmen, wenn die Anzahl der Rahmen, die eine von den Grenzbestimmungsmitteln nicht zufriedenstellend bestimmte Grenze haben, innerhalb des vorgegebenen Grenzwertes liegt.

11. Ausrüstung wie in irgendeinem der Ansprüche 1 bis 8 beansprucht, wobei das lichtempfindliche Material (2) Film ist, und die Verarbeitungsmittel (EX; 20-24) einen Filmschneidebereich (FC) haben, um zwischen einem Rahmen und einem benachbarten Rahmen bei einer von den Positionssteuermitteln (PC) bestimmten Position zu schneiden, und um den Film (2) bei jeder zum Schneiden des Films (2) vorgegebenen Anzahl von Rahmen zu trennen.

12. Ausrüstung wie in Anspruch 11 beansprucht, wobei bei einer Nichtänderbarkeitseingabe-Mitteilung bei den Positionssteuermitteln (PC) und während der Ausführung des Änderungsprozesses die Position zwischen den Rahmen, die am nächsten bei der Ausgangsseite des Vorschubpfades des Films nach der vorgegebenen Schneideposition liegt, von den Steuermitteln als die neue Schneide-Einstellposition eingestellt wird.

13. Ausrüstung wie in irgendeinem der Ansprüche 11 und 12 beansprucht, wobei die Positionssteuermittel (PC) feststellen, ob eine zufriedenstellende Bestimmung der Grenze einer vorher eingestellten Anzahl von ab der Schneideposition vorgeschobenen Rahmen durch die Grenzbestimmungsmittel (BD; 26) erfolgt ist, und den Änderungsprozeß nur dann ausführen, wenn die Grenzbestimmung bei einem oder mehr der vorhergehenden oder nachfolgenden Rahmen nicht zufriedenstellend ist.

14. Ausrüstung wie in irgendeinem der Ansprüche 1 bis 8 beansprucht, wobei das lichtempfindliche Material (2) Film ist, und die Verarbeitungsmittel (EX; 20-24) mit einem Belichtungsbereich versehen sind, um ein Bild eines Films auf Photopapier zu projizieren, und einen Filmschneidebereich (FC) umfassen, um den Film bei einer vorgegebenen Position zwischen benachbarten Rahmen des Films zu schneiden.

15. Ausrüstung wie in Anspruch 14 beansprucht, wobei die Positionssteuermittel (PC) den Änderungsprozeß ausführen, wenn die Anzahl der kontinuierlichen Rahmen, bei denen durch die Grenzbestimmungsmittel (BD; 26) eine Grenze nicht zufriedenstellend bestimmt werden kann, über eine vorgegebenen Grenzwert hinausgeht; und die Positionssteuermittel die Vorschubmittel (TM; 14, 25, 31) steuern, um durch Vorschieben des lichtempfindlichen Materials um eine nur einem Rahmen des Films entsprechende Menge die Position zu bestimmen, wenn die Anzahl der Rahmen, die eine von den Grenzbestimmungsmitteln nicht zufriedenstellend bestimmte Grenze haben, innerhalb des vorgegebenen Grenzwertes liegt, wobei die Positionssteuermittel (PC) feststellen, ob eine zufriedenstellende Bestimmung der Grenze einer vorher eingestellten Anzahl von ab der Schneideposition vorgeschobenen Rahmen durch die Grenzbestimmungsmittel (BD; 26) erfolgt ist, und den Änderungsprozeß nur dann ausführen, wenn die Grenzbestimmung von einem oder mehr der vorhergehenden oder nachfolgenden Rahmen nicht zufriedenstellend ist.

## Revendications

1. Dispositif de traitement (1) d'un matériau photosensible, comprenant:
(a) un moyen d'avancement (TM; 14, 25, 31) pour faire avancer un matériau photosensible (2) comportant plusieurs clichés d'image (A-G) qui y sont enregistrés;
(b) un moyen de détermination de la distance d'avancement (TD; 15) pour déterminer la distance d'avancement du matériau photosensible;
(c) un moyen de détermination des limites (BD; 26) pour déterminer les limites de l'image entre des clichés d'image adjacents sur ledit matériau photosensible avancé par ledit moyen d'avancement;
(d) un moyen de traitement (EX; 20, 21, 22, 23, 24) pour exposer des images desdits clichés d'image dudit matériau photosensible (2) à du papier photographique;
(e) un moyen de commande de la position (PC) pour déterminer et assurer la commande de la position dudit matériau photosensible par rapport audit moyen de traitement sur la base des informations déterminées par ledit moyen de détermination de la distance d'avancement et dudit moyen de détermination des limites;
(f) un moyen d'entrée de modification (OP) pour entrer manuellement une commande de modification en vue de la modification de la position dudit matériau photosensible déterminée et commandée par ledit moyen de commande de la position;
(g) un moyen de lecture de l'image (RP; 13) pour lire les images dudit matériau photosensible sur le côté d'entrée dudit moyen de traitement; caractérisé par:
(h) un moniteur (MO) destiné à afficher les informations lues par ledit moyen de lecture de l'image (RP; 13); le moyen de commande de la position (PC) étant destiné à déterminer si la détermination des limites de l'image par ledit moyen de détermination des limites (BD; 26) est satisfaisante ou non satisfaisante, et, ladite détermination étant insatisfaisante, le moyen de commande de la position exécutant un procédé de modification dans lequel le moniteur, sur la base des informations lues par ledit moyen de lecture de l'image, affiche une indication pour modifier, par l'intermédiaire dudit moyen d'entrée de modification, la position du matériau photosensible par rapport audit moyen de traitement.

2. Dispositif selon la revendication 1, dans lequel, lorsque ledit moyen de commande de la position (PC) détermine que ladite détermination des limites est insatisfaisante, le moyen de commande de la position affiche sur ledit moniteur (MO): i) un indice de position modifiée (41) et ii) un indice de position réglée (42) sur la base des informations des limites de l'image lues par ledit moyen de lecture de l'image (RP; 13) et déterminées par ledit moyen de détermination des limites.

3. Dispositif selon la revendication 1, dans lequel ledit moyen de commande de la position (PC), ledit moyen de détermination des limites (BD; 23) ayant fait une détermination insatisfaisante lors de l'exécution dudit procédé de modification, affiche sur ledit moniteur (MO) les clichés d'image positionnés précédent et suivant, sur la base des informations lues par ledit moyen de lecture de l'image (RP; 13) avec un indice de position modifiée (41) en fonction de la distance d'avancement du matériau photosensible (2).

4. Dispositif selon les revendications 1 à 3, comprenant en outre une station de positionnement (DS) pour la détermination visuelle de la position dudit matériau photosensible (2), dans lequel, ledit moyen de commande de la position (PC) ayant reçu un message d'entrée d'incapacité de modification lors de l'exécution du procédé de modification, ledit moyen de commande de la position assure la commande dudit moyen d'avancement (TM; 14, 25, 31) pour faire avancer une zone dudit matériau photosensible (2), dont ladite position n'est pas déterminée, et pour arrêter automatiquement ledit moyen d'avancement au niveau de la station de positionnement.

5. Dispositif selon les revendications 1 à 4, englobant en outre une porte d'ouverture de la voie d'avancement (RG) au niveau d'un côté d'entrée dudit moyen de traitement (EX; 20-24) sur la voie d'avancement dudit matériau photosensible (2), pouvant être commutée entre deux états, un état d'avancement, dans lequel ledit matériau photosensible peut être avancé vers ledit moyen de traitement, et un état de décharge dans lequel ledit matériau photosensible peut être enlevé de la voie d'avancement.

6. Dispositif selon la revendication 5, dans lequel ledit moyen de commande de la position (PC), lors de l'exécution dudit procédé de modification, fait avancer ledit matériau photosensible (2) vers ladite porte (RG) lors de l'entrée d'un message d'incapacité de modification, commutant la porte dudit état d'avancement vers ledit état de décharge.

7. Dispositif selon les revendications 1 à 6, comprenant en outre un moyen auxiliaire de détermination des limites (26, 30) pour déterminer les limites de l'image entre deux clichés adjacents dudit matériau photosensible (2), au niveau d'une position initiale du côté d'entrée dudit moyen de traitement (EX; 20-24) de la voie d'avancement du matériau photosensible, ledit moyen de commande de la position (PC) comparant les informations déterminées par ledit moyen de détermination des limites (BD; 26) et ledit moyen auxiliaire de détermination des limites, pour détecter la différence de la distance d'avancement du matériau photosensible au niveau de chaque position de détermination.

8. Dispositif selon l'une quelconque des revendications 1 à 7, comprenant en outre un moyen d'ajustement du contraste (11) pour ajuster le contraste de l'image sur la base des informations lues par ledit moyen de lecture de l'image (RP; 13) et affichées sur ledit moniteur (MO).

9. Dispositif selon l'une quelconque des revendications 1 à 8, dans lequel ledit matériau photosensible (2) est un film, ledit moyen de traitement (EX; 20-24) comportant une partie d'exposition de projection pour exposer l'image de la position du film réglée par ledit moyen de commande de la position (PC) sur du papier photographique.

10. Dispositif selon la revendication 9, dans lequel ledit moyen de commande de la position (PC) exécute ledit procédé de modification lorsque le nombre des clichés adjacents, pour lesquels il est impossible de déterminer les limites de façon satisfaisante par l'intermédiaire dudit moyen de détermination des limites (BD; 26), dépasse une limite prédéterminée; ledit moyen de commande de la position assurant la commande dudit moyen d'avancement (TM; 14, 25, 31) pour déterminer la position en faisant avancer ledit matériau photosensible d'une distance équivalente à un cliché du film lorsque le nombre de clichés dont les limites n'ont pu être déterminées de façon satisfaisante par ledit moyen de détermination des limites est compris dans ledit intervalle prédéterminé.

11. Dispositif selon l'une quelconque des revendications 1 à 8, dans lequel ledit matériau photosensible (2) est un film, ledit moyen de traitement (EX; 20-24) comportant une partie de découpe du film (FC) pour assurer la découpe entre un cliché et un cliché adjacent au niveau d'une position déterminée par ledit moyen de commande de la position (PC), et pour séparer le film (2) après chaque nombre prédéterminé de clichés en vue de la découpe du film (2).

12. Dispositif selon la revendication 11, dans lequel, lors de l'entrée d'un message d'incapacité de modification par ledit moyen de commande de la position (PC) et au cours de l'exécution dudit procédé de modification, la position entre les clichés les plus proches du côté de sortie de la voie d'avancement du film vers la position de découpe prédéterminée, est réglée comme constituant la nouvelle position de découpe réglée par ledit moyen de commande.

13. Dispositif selon l'une quelconque des revendications 11 et 12, dans lequel ledit moyen de commande de la position (PC) détermine si la détermination par ledit moyen de détermination des limites (BD; 26) des limites d'un nombre préréglé de clichés avancés à partir de ladite position de découpe est satisfaisante ou non, et exécute le procédé de modification uniquement lorsque la détermination des limites d'un ou de plusieurs clichés précédents ou suivants n'est pas satisfaisante.

14. Dispositif selon l'une quelconque des revendications 1 à 8, dans lequel ledit matériau photosensible (2) est un film, ledit moyen de traitement (EX; 20-24) comportant une partie d'exposition pour exposer une image d'un film sur du papier photographique, et englobant une partie de découpe du film (FC) pour couper le film au niveau d'une position prédéterminée entre les clichés adjacents du film.

15. Dispositif selon la revendication 14, dans lequel ledit moyen de commande de la position (PC) exécute ledit procédé de modification lorsque le nombre de clichés successifs pour lesquels des limites n'ont pu être déterminées de façon satisfaisante par ledit moyen de détermination des limites (BD; 26) dépasse une limite prédéterminée; ledit moyen de commande de la position assurant la commande dudit moyen d'avancement (TM; 14, 25, 31) pour déterminer le position en faisant avancer ledit matériau photosensible d'une distance équivalente à un cliché seulement du film lorsque le nombre des clichés dont les limites n'ont pu être déterminées de façon satisfaisante par ledit moyen de détermination de limites est compris dans ledit intervalle prédéterminé, ledit moyen de commande de la position (PC) déterminant si la détermination par ledit moyen de détermination des limites (BD; 26) des limites d'un nombre prédéterminé de clichés avancés à partir de ladite position de découpe est satisfaisante ou non, et exécute le procédé de modification uniquement lorsque la détermination des limites d'un ou de plusieurs clichés précédents ou suivants est insatisfaisante.
